# EUROPEAN PATENT APPLICATION

(11) **EP 2 960 754 A2**
(43) Date of publication of application: **30.12.2015**
(21) Application number: 15179989.7
(22) Date of filing: 06.08.2015
(51) Int. Cl.: G06F 3/03, G06F 3/041, G06F 3/0487

(54) **SENSING DEVICE**

(71) Applicant: Sensirion AG, 8712 Stäfa (CH)
(72) Inventor: KINZER, Michel, 8712 Stäfa (CH); KOLLER, Marcel, 8712 Stäfa (CH); HASENFRATZ, David, 8712 Stäfa (CH); SACCHETTI, Andrea, 8712 Stäfa (CH)
(74) Representative: Strässle, Simon

(57) **Abstract**

Electronic device (10) comprising a housing (11) with a fluid-filled cavity (12), the cavity (12) being coupled to the housing (11) such that a pressure in said cavity (12) changes upon application of an external force onto the housing (12). A pressure sensor (13) is arranged for sensing inside said cavity (12) said pressure change and for generating a pressure signal indicative of said pressure change. The device (10) further comprises an evaluation unit (14) for deriving from said pressure signal at least one component of said external force and for generating a force signal that is indicative of said at least one component of said external force and/or for deriving from said pressure signal a deformation of the housing (11) in at least one direction and to generate a force signal that is indicative of said deformation of the housing (11) in at least one direction.

## Description

### TECHNICAL FIELD

The present invention relates to an electronic device with a sensor sensing inputs for generating control signals for controlling at least one function of said electronic device. The electronic device is preferably a mobile device, e.g. with a touch screen panel, such as a smart phone, a smart watch, or a wearable. Moreover, the present invention relates to a method of controlling said at least one function of the electronic device by using said sensor.

### PRIOR ART

Modern electronic devices are able to perform a plethora of different functions and are controllable by a number of intuitive input gestures including typing, swiping, and pressing onto virtual buttons created on touch screen panels or the like. Known touch screen panels are able to display any kind of button or input element that is presentable on a screen, yet it commonly receives only whether a certain area of the panel has been touched or not. As the number of functions of state of the art devices is so rich, it is desirable to have still even more versatile input options.

### SUMMARY OF THE INVENTION

Accordingly, it is an object of the present invention to provide an electronic device with improved input options.

This object is achieved by an electronic device, in particular a mobile phone, a wrist watch, a laptop, a tablet, a fitness tracker, a game controller, or another electronic device, comprising:
a housing;
at least one fluid-filled cavity that is coupled to the housing such that a pressure *p* in said cavity changes upon application of an external force onto the housing;
at least one pressure sensor associated with said cavity and configured and arranged for sensing inside said cavity said change in pressure *p* due to said external force, wherein the pressure sensor is further configured to generate a pressure signal S indicative of said change in said in-cavity pressure *p*; and
an evaluation unit configured and arranged to receive said pressure signal *S,* wherein the evaluation unit is further configured:
   to derive from said pressure signal *S* at least one component of said external force *F* or an equivalent thereof, and to generate a force signal *f* that is indicative of said at least one component of said external force *F* or the equivalent thereof; and/or
   to derive from said pressure signal *S* a deformation of the housing in at least one direction or an equivalent thereof, and to generate a force signal *f* that is indicative of said deformation of the housing in at least one direction or the equivalent thereof.
   In the context of the present invention, the term *"pressure p"* is to be understood as the pressure at some point within the fluid in the fluid-filled cavity. In air filled devices, for example, that have a finite fluid exchange rate with earth's atmosphere, the pressure *p* is normally the barometric pressure dominated by the atmospheric pressure and of the order of 1 bar. It is, however, conceivable, that the cavity is fluid proof and filled with a fluid with pressure *p* that is lower or higher than the atmospheric pressure. Then the pressure *p* within the cavity is independent of the exterior of the cavity. Additional pressure arises in the cavity, if the cavity is squeezed due to action of the external force; a pressure decrease occurs if the cavity is expanded due to action of the external force. The relaxation time for decreasing the pressure change back to the original value shall be long enough for the sensor to sense the change.

Accordingly, the pressure sensor may detect a pressure change or an absolute pressure. In the context of the present invention, the term *"pressure sensor*" refers to a pressure sensor for determining a pressure difference between the pressure in the cavity and a pressure reference (*e.g.* a constant pressure source or the exterior) or to a pressure sensor as taught, *e.g.,* in EP 2 871 456 A1 for determining an absolute pressure in the cavity. Accordingly, the pressure sensor may be a differential pressure sensor or preferably an absolute pressure sensor.

In the context of the present invention, the term *function*" refers to tasks or features that are executed by the electronic device upon command input by the user. As an example, single touch inputs by the user onto a touch screen panel may be used for typing letters. A first function may be writing in small letters, a second function may be writing in capital letters. The user may type with a small input touch force or with a large input touch force. According to the present invention, the electronic device may be configured to distinguish by means of its pressure sensor inputs with respect to small input touch force and the large input touch force. The electronic device then writes, for example, small letters if an input with a small input touch force is detected (first function) or with capital letters if a large input touch force is detected (second function).

In the context of the present invention, the term "*external force*" refers to a force that acts onto the housing of the electronic device, preferably but not necessarily onto a touch screen panel thereof.

In some embodiments, the electronic device may be configured to receive external force inputs, *e.g.* by user gestures, onto a part or parts of the housing, preferably onto any part or parts of the housing such a housing wall sections, or onto any part or parts of the housing except for the touch screen panel or other conventional input means, if any.

The external force may be a touch by a user's finger or a squeeze of the housing in the user's hand or an input by a dedicated electronic pen or the like. The external force may range, for example, between 0.01 newton and 10 or 100 netwons.

In the context of the present invention, the term "*fluid-filled cavity*" refers to an space, preferably within the electronic device, that is filled with a fluid, preferably with air. Other fluids may be used.

As nowadays, waterproof housings are often used for smart phones, the housing itself may thus provide said cavity with its interior space. Accordingly, the pressure sensor may simply be installed in said housing with the phone electronics. As such housings are typically filled with air, said air acts as the aforementioned fluid. Upon touching the smart phones touch screen panel in order to use the phone or the only housing, the air pressure within the housing increases, which is readily sensed by the internal pressure sensor. As the pressure change is a measure for the external force applied during the touch input, the smart phone may evaluate by means of the pressure sensor the actual mechanical input strength, based on which functions of the smart phone may be controlled.

A cavity volume of 1 cubic millimeter to 100'000 cubic millimeters, preferably of 10 cubic millimeters to 1'000 cubic millimeters may be used. A typical pressure change may range from 0.01 millibar to 100 millibars at temperatures ranging, *e.g.,* from -50 degrees Celsius to +80 degrees Celsius.

It is to be understood, that the general principle may also work outside the limits given here, therefore, said limits are to be understood as examples that do not limit the scope of the claims.

In the context of the present invention, the term "*the cavity is coupled to the housing"* means that the cavity is arranged and designed such that the external force, which leads to a deformation of the housing or cavity or simply to a pressure change in the cavity, is sensed by the sensor. Accordingly, the deformation of the housing due to the external force should be transferred to the walls that delimit the cavity such that the cavity shape changes upon inputting by application of the external force. The simplest way would be to use walls of the housing that are designated to receive at least part of the external force to form at least part of the cavity walls. Indirect connections via motion transfer elements may be used additionally or in the alternative.

The present invention is based on the insight that a pressure sensor may be used to further evaluate input actions by a user of the electronic device. Accordingly, a new user input dimension is offered that is sensed by means of said pressure sensor, the strength of external force used for inputting commands.

It is to be understood that the present invention also offers further control options as the external force does not necessarily have to be applied to a touch screen panel of the electronic device. It can be applied anywhere onto the housing. This means that users are now offered the option of controlling electronic devices, in particular mobile devices such as smart phones and smart watches, by applying force to the housing. As an example, the user may tap three times within one second onto the back of the housing of his smart phone. The tapping is registered by the pressure sensor and may be used in a predetermined way, *e.g.* a photo may be shot upon three tapping gestures per second. Other applications may include a control for a computer game, *e.g.* holding tight to a rope, or squeezing such an electronic device according to invention.

Accordingly, the present invention not only offers a more sophisticated use of a conventional touch screen panel, it allows for making the entire housing touch sensitive for control purposes.

In some embodiments, the electronic device is configured to generate from said force signal *f* a control signal *C* for controlling at least one function of the electronic device. As explained above, the control signal *C* may lead the electronics to display small or capital letters, depending on the nature of the input of the user and the configuration of the device. Any other function of the electronic device may use the input force dimension as made accessible by the present invention in order to improve the handling of the electronic device.

In some preferred embodiments, the pressure sensor may be arranged within said cavity. Accordingly, the term *"pressure sensor being associated with a cavity"* preferably means that the sensor is actually arranged within said cavity.

Preferably, said cavity is at least part of an interior space of said housing. Accordingly, the pressure sensor may simply be comprised in a fluid-exchange controlled or in a substantially fluid-proof cavity, in particular in a fluid-exchange controlled or in a substantially fluid-proof housing along with the device's electronics, the sensor being exposed to a pressure in said cavity, wherein the pressure in this cavity varies with the application of said external force. The cavity may however, also be associated with housing.

Accordingly, in some preferred embodiments, said housing of the electronic device or said cavity may be fluid-exchange controlled or substantially fluid-proof, wherein the fluid preferably is air and/or water.

Within the context of the present invention, the term "*fluid-exchange controlled*" is to be understood as having a fluid exchange rate between the cavity and the exterior such that the pressure sensor may sense a pressure change, *i.e.* a pressure increase or decrease, in the cavity due to the application of the external force *F.* The fluid exchange between the cavity and its exterior is delayed as the relaxation of the pressure disturbance requires time such that a detectable pressure change can establish in the cavity within the measurement window of the pressure sensor.

Within the context of the present invention the term "*substantially fluid-proof*" means that said exchange rate between the cavity and the exterior is reliable during the pressure change detected by the pressure sensor.

Accordingly, the pressure change in a fluid exchange controlled cavity is smaller than the pressure change in a substantially fluid-proof cavity.

Preferably, the housing is fluid-sealed to such a degree that a response time *τ*ₑₓ of the fluid exchange during said pressure change between the cavity and the exterior of the cavity is longer, preferably at least 3 to 10 times longer, than a typical rise time *τ*_{P} of the pressure signal *S* inside the cavity.

Within the context of the present invention the term "*response time τₑₓ of the fluid exchange during said pressure change between the cavity and the exterior of the cavity"* is to be understood as the characteristic time needed for the over pressure or under pressure in the housing to relax back to normal pressure, e.g. ambient air pressure.

Within the context of the present invention the term "*typical rise time τ_{P} of the pressure signal S*" is to be understood as the characteristic time required for the pressure change to be established to its extremum, *i.e.* until the maximum pressure or minimum pressure has developed in the cavity. A typical rise time may range, for example, from 0.02 second to 0.1 second.

In some embodiments the evaluation unit may be configured to derive an absolute value |*F*| and/or a time dependence *F*(t) and/or the derivatives of the time dependence *F*(t) of said at least one component of said external force *F* or the equivalent thereof. The electronic device is configured to use said absolute value |*F*| or said time dependence *F*(t) or said derivatives of the time dependence *F*(t), respectively, as the control signal *C* for controlling said at least one function of the electronic device. Accordingly, if, for example, an absolute force value |*F*| of an input touch exceeds a force of 1 newton, a capital letter may be the input result, if the absolute force value |*F*| of the input touch is less force than 1 newton, a small letter may be the input result. Similarly, the time dependence *F*(t) and/or the derivatives of the time dependence *F*(t) may be used as an input dimension. Accordingly, if the input touch results in sharp rise of the pressure *p* inside said cavity, a capital letter may be the input result; if the input touch results in smooth and slow rise of said pressure *p* in comparison to the sharp rise, a small letter may be the input result. Also combinations of absolute value |*F*| and time dependence *F*(t) and/or the derivatives of the time dependence *F*(t) may be used for providing input option. The following table illustrates that four functions may be chosen by having two absolute values |*F*| and two time dependences *F*(t).

| | high \|*F*\| | low \|*F*\| |
|---|---|---|
| sharp *F*(t) | Function 1 | Function 3 |
| slow *F*(t) | Function 2 | Function 4 |

Of course, more than two values |*F*| and time dependences *F*(t) may be used.

In some embodiments, multi-touch options may be provided. For example, multiple cavities with at least one pressure sensor each may be comprised by the electronic device.

In some embodiments, the electronic device may be configured to use as said external force *F* a force applied onto a part or parts of the housing, in particular onto a touch screen panel of the electronic device or onto any part or parts of the housing except for the touch screen panel or other conventional input means, during an input gesture of a user of the electronic device. Such an input gesture may be typing letters on a touch screen panel of a smart phone.

In some embodiments a sensor response time τₛₑₙ of the pressure sensor and a response time *τ*ₑᵥₐₗ of the evaluation unit may be chosen such that the electronic device is configured to use repeated tapping motions by the user for controlling said at least one function of the electronic device.

The sensor response time *τ*ₛₑₙ is a measure for how close in time two different pressure measurements may be. A typical sensor response time *τ*ₛₑₙ ranges from 1 millisecond to 10 milliseconds.

The typical response time *τ*ₑᵥₐₗ of the evaluation unit is the time the unit needs for providing the force signal *f* after having received the pressure signal for the sensor. A typical response time *τ*ₑᵥₐₗ of the evaluation unit may be shorter than *τ*ₛₑₙ. Typical tapping motions of humans occur on the 100 milliseconds time scale.

In some embodiments the electronic device may be a mobile device, in particular a wrist watch, a mobile phone, preferably a smart phone, a tablet, wearables, or a laptop.

The present invention also relates to a method that provides to the user of the electronic device improved input options.

Accordingly, a method for controlling at least one function of an electronic device, the electronic device comprising a housing and being preferably a mobile device, is suggested, the method comprising the steps of:
sensing an external force *F* onto said housing with a pressure sensor, the external force *F* being preferably applied to a touch screen panel of the electronic device or to a part or parts of the housing or to any part or parts or to any part or parts of the housing except for the touch screen panel or other conventional input means, if any,
   wherein the electronic device comprises a fluid-filled cavity that is coupled to said housing such that a pressure *p* in said cavity changes upon application of said external force *F* onto the housing;
   wherein the electronic device comprises the pressure sensor that is used for measuring said change of said pressure *p* in said cavity in response to said external force *F* acting onto the housing, wherein a pressure signal *S* indicative of said change of said pressure *p* is generated with said pressure sensor;
   wherein the electronic device comprises an evaluation unit,
   wherein said pressure signal *S* is received by the evaluation unit for
   - deriving at least one component of said external force *F* or a deformation of the housing in at least one direction or equivalents thereof, and
   - generating a force signal *f* that is indicative of said at least one component of said external force *F* or said deformation of the housing;
   wherein said force signal *f* is used for generating a control signal *C* for controlling at least one function of the electronic device.

Accordingly, the present method provides additional input options to the user of an electronic device by adding a light, energy efficient, and reliable pressure sensor available at low costs, preferably an absolute pressure sensor. In devices with water- or airproof housings, this sensor may be simply included into the housing while the cavity is provided by the free internal space in the housing.

In some embodiments, said method comprises an absolute value |*F*| and/or a time dependence *F*(t) of said at least one component of said external force *F* is sensed an used for controlling said at least one function of the electronic device, as discussed above.

It is another aspect of the present invention to suggest the use of a pressure sensor, preferably an absolute pressure sensor, to determine at least one component of an external force acting onto a housing of an electronic device, in particular of a touch screen panel of a mobile device, wherein a force signal *f* is generated, in particular for controlling functionalities of said electronic device, based on a pressure signal *S* generated by said pressure sensor.

In a further aspect, the present invention relates to a computer program product comprising computer program code, wherein the program code, when carried out in an integrated circuitry, causes the integrated circuitry:
- sensing an external force *F* onto said housing with at least one pressure sensor, preferably an absolute pressure sensor, the external force *F* being preferably applied to a touch screen panel or a housing of the electronic device or to the housing, wherein the electronic device comprises at least one fluid-filled cavity that is coupled to said housing such that a pressure *p* in said cavity changes upon application of said external force *F* onto the housing;
   wherein the electronic device comprises the pressure sensor that is used for measuring said change of said pressure *p* in said cavity in response to said external force F acting onto the housing, wherein a pressure signal *S* indicative of said change of said pressure *p* is generated with said pressure sensor;
   wherein the electronic device comprises an evaluation unit,
   wherein said pressure signal *S* is received by the evaluation unit for
   - deriving at least one component of said external force *F* or a deformation of the housing in at least one direction or equivalents thereof, and
   - generating a force signal *f* that is indicative of said at least one component of said external force *F* or said deformation of the housing;
   wherein said force signal *f* is used for generating a control signal *C* for controlling at least one function of the electronic device.

The computer program may be provided in a source code, in a machine-executable code, or in any intermediate form of code-like object code. It can be provided as a computer program product on a computer-readable medium in tangible form, *e.g.* on a CD-ROM or on a Flash ROM memory element, or it can be made available in the form of a network-accessible medium for download from one or more remote servers through a network.

It is to be understood that these aspects will be better understood when considered with the description of the preferred embodiments below. Aspects may be combined with one another without departing from the scope of the appended claims and further embodiments may be formed with parts or all the features of the embodiments as described herein.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a first embodiment of the electronic device according to invention including a an absolute pressure sensor arranged in a cavity of the device;
- Fig. 2: shows a second embodiment of the electronic device according to invention including said absolute pressure sensor arranged in the cavity of the device;
- Fig. 3: shows a third embodiment of the electronic device according to invention including said absolute pressure sensor arranged outside said cavity of the device;
- Fig. 4: shows a simplified block diagram of a computer program product for the electronic device according to the present invention; and
- Fig. 5: shows a pressure measurement with an absolute pressure sensor built in an IP67 waterproof housing.

### DESCRIPTION OF PREFERRED EMBODIMENTS

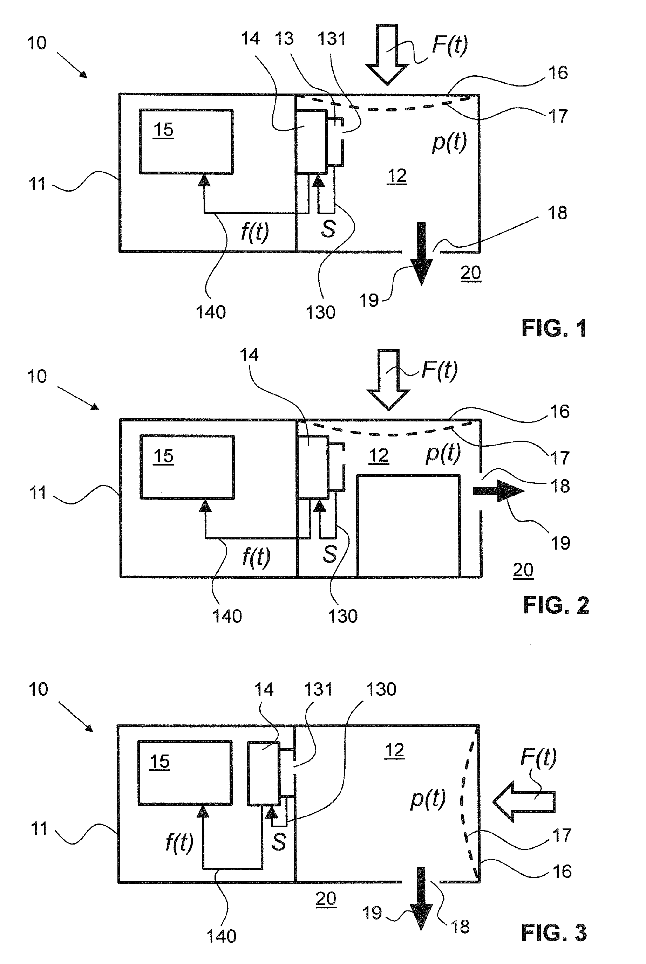

Figure 1 shows a first embodiment of an electronic device 10 according to the present invention. The electronic device 10 comprises a housing 11. Said housing 11 comprises a cavity 12 which is air-filled. An absolute pressure sensor 13 and an evaluation unit 14 associated with said sensor 13 are arranged in said cavity 12. The electronic device 10 further comprises electronics with integrated circuitry 15. The sensor 13 and the evaluation unit 14 are linked to one another via communication link 130; the evaluation unit 14 and the electronics 15 are linked to one another via communication link 140. The communication links 130, 140 provide for data exchange between the connected parts; they may be physical and/or wireless communication links.

The housing 11 comprises a touch screen panel 16, 17. Figure 1 shows the touch screen panel in neutral configuration 16 (solid line) and in pushed-in configuration 17 (broken line).

It is to be understood, that any housing part may be pushed-in or pulled out such to achieve the pressure change, it is not necessary to use the conventional touch screen panel only. In some embodiments, any other part than the touch screen panel 16, 17 or other conventional input means, e.g. exterior wall sections of the housing 11 itself, may be used for controlling the electronic device 10 according to invention.

The housing 11 is substantially airproof and has only a limited air exchange rate with the exterior 20 of a cavity 12 via a schematic air exchange port 18. An air flow 19 may be exchanged through the fluid outlet opening 18 between the cavity 12 and the exterior space 20. Through port 18, pressure relaxation occurs. As mentioned above, the port 18 is optional. A fluid-proof cavity 12 may be used instead.

The principal function of the present invention is now explained. The touch screen panel (which henceforth shall also include other housing sections) is in neutral configuration 16. A user of the device 10 performs a touch input by pushing-in the touch screen panel 16 locally such that the panel 16 moves into its pushed-in configuration 17. The cavity 12 is coupled to the touch screen panel 16, 17 such that the pushing-in of the panel 16 entails an increase of the pressure *p* in the cavity 12. Said increase may range, for example, between 0.01 millibar and 10 millibars.

The exchange rate 19 for the pressure difference relaxation is low enough (*e.g.* 0.05 second to 0.1 second) such that the pressure sensor 13 senses said pressure change in the pressure *p* in cavity 12.

The sensor 13 senses a time variation *p*(t) of the pressure *p.* In the present case, it is an increase of said pressure *p* with time. It could, however, also be a decrease. In one aspect, the input touch force, *i.e.* the external force *F,* may be used as a further parameter to control the device 10.

Accordingly, the pressure sensor 13 has an opening 131 for sensing the pressure *p* in the cavity 12. The pressure sensor 13 is configured to generate a pressure signal *S* indicative of the pressure within the cavity 12. The pressure sensor 13 may provide pressure signal *S* in a continuous or quasi-continuous manner such that a change in the pressure is detectable. It is also conceivable that a differential pressure between a known pressure source and the cavity 12 or between the exterior 20 and the cavity 12 is used to detect the pressure change. Via communication link 130, said pressure signal S is communicated to the evaluation unit 14.

The evaluation unit 14 is configured to receive the pressure signal *S* from the pressure sensor 13. The unit 14 then generates a force signal *f* based on the pressure change in the cavity. If a time variation of the pressure signal *S* is recorded, a time dependent force signal *f*(t) may be generated by the unit 14. This force signal *f* may be indicative of at least one component of the external force *F* or of a deformation of the housing 11 in at least one direction or an equivalent thereof. The force signal *f* may be time dependent or simply indicative of the maximum external force component detected. In the following, when the force signal *f*(t) is written, it shall include the single measurement signal *f*, where the context allows so.

The integrated circuitry 15 is configured to receive the force signal *f*(t) and to use the information about the external force or deformation as an input parameter for controller functions of the electronic device 10.

As a simple example, the electronics may include integrated circuitry 15 which is configured to have device 10 display a capital letter if the pressure change during the input gesture is equal to or larger than 5 millibars. Accordingly, if the user presses the virtual button on the touch screen panel 16 with a large force such that the resulting pressure change in the cavity 12 is more than 5 millibars, a capital letter associated with said button is inputted. If the external force is smaller such that said pressure change is less than 5 millibars, a small letter is inputted. Accordingly, the implementation of the pressure sensor 13 opens a new input dimension which is the input force leading to a pressure change in the cavity 12. Furthermore, it allows for inputs through the housing 11 itself and not only by means of buttons and touch screen panels.

**Figure 2** shows a second embodiment of the electronic device 10. The functionally identical parts of the first and second embodiments are designated with the same reference numerals. Figure 2 illustrates that the cavity 12 may be the spare interior space of a common electronic device housing 11 that occurs naturally during manufacturing of the device 10, the housing 11 being air tight to such a degree that a pressure change in the cavity 12 may be detected by means of the pressure sensor 13 comprised in the cavity 12.

**Figure 3** shows a third embodiment of the electronic device 10. The functionally identical parts of the first and third embodiments are designated with the same reference numerals. In the third embodiment, the pressure sensor 13 is arranged outside the cavity 12 but has a sensing port open to the cavity such as to sense the pressure within the cavity 12.

In a forth embodiment (not shown), the pressure sensor 13 may even be arranged outside the housing 11 whilst being fluidly connected the cavity 12 such as to sense any pressure change within the cavity 12.

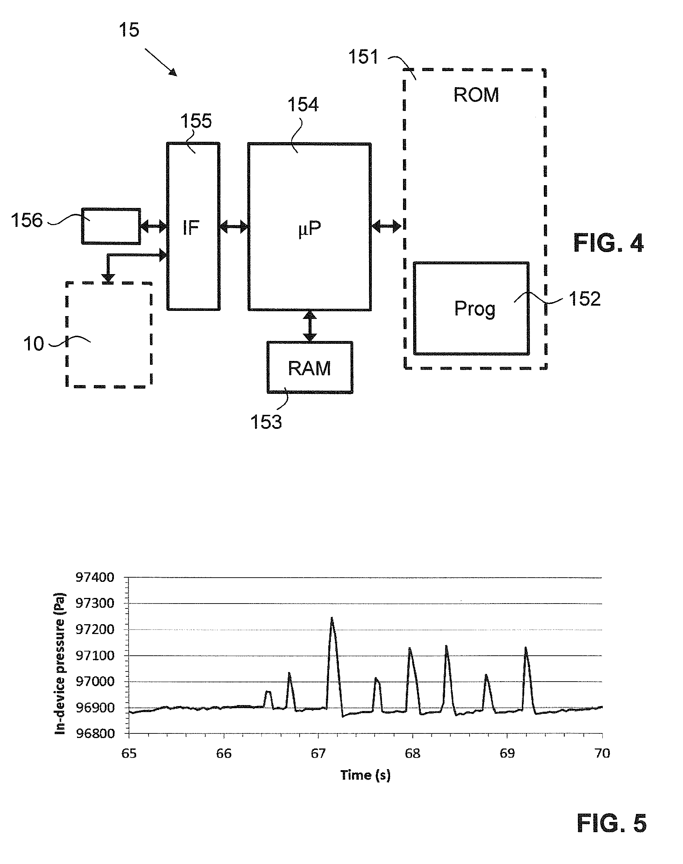

**Figure 4** shows a simplified block diagram of a computer program product for the electronic device 10 as described herein. The integrated circuitry 15 comprises a processor unit (CPU, µP) 154, a non-volatile (*e.g.* a flash ROM) memory 151, and a volatile (RAM) memory 153. The processor 154 communicates with the memory modules 151, 153. The non-volatile memory 151 stores, *inter alia,* received or generated signals, as well as a machine-executable program code 152 for execution in the processor 154. Via a data interface 155, the processor 154 communicates with various peripherals, including, for example and depending on the application, the pressure sensor 13 and/or a user interface 156. The user interface 156 may include, e.g., at least one of a network interface for interfacing with an external input/output device, a dedicated input device such as a keyboard and/or mouse for inputting, e.g., an absolute force value or the like, and a dedicated output device, such as, *e.g.,* an LCD screen for displaying information.

**Figure 5** shows a measurement with a pressure sensor 13. Figure 5 shows the absolute pressure *p* in Pascals versus time in seconds. The pressure sensor 13 is built in an IP67 waterproof housing 11, wherein tapping gestures are performed on the outer housing surface.

As sensor 12 a modern pressure sensors 13 is used. These pressure sensors 13 may be very small (size less than a cubic millimeters) and energy efficient (RMS noise x power consumption: 1.6 Pa x 4.2 µW) whilst offering excellent resolution (±0.01 millibar) at ambient pressures, see, for example, Sensirion®'s pressure sensor SPT-BX.

Here, the IP67 refers to the IP rating code rating the protection level against intrusion of solids and fluids into the housing.

Figure 5 shows a measurement where the in-device pressure is monitored with the conventional pressure sensor 13 while tapping onto the housing 11. As one can see, taping frequency may be in the range of 2 to 10 tapping gestures per second. The pressure changes range from 40 to 400 Pascals, *i.e.* 0.4 millibar to 4 millibars. The base pressure is the ambient pressure of 0.969 bar.

As one can see the first, second, fourth, and eight tapping gestures (from the left in Fig. 5) result in a pressure change of the order of 1 millibar. These small force input gestures may, for example, be used for small letter typing. The fourth, fifth, and seventh tapping gestures result from medium force tapping gestures that may, for example, be used for capital letter typing. The third tapping gesture may result from a strong force tapping gesture and may, for example, be used for inputting a line break command.

The measurement in Fig. 5 shows further that an IP67 protection level is suitable enough fluid-tight for implementing the present invention with conventional pressure sensors 13.

As one can appreciate, the present invention adds new dimensions to the control options, it allows for using the entire housing 11 as touch screen panel, and therefore offers an immense scope for use to control electronic devices, in particular mobile and Internet of Things (IoT) applications, such as smartphones, tablets, and wearables.

The present invention is not limited to the above-described embodiments, it is to be understood that the invention may also be differently embodied within the scope of the following claims.

### LIST OF REFERENCE SIGNS

| | | | |
|---|---|---|---|
| 10 | Electronic device | 16 | neutral touch screen panel |
| | | 17 | depressed touch screen panel |
| 11 | Housing | | |
| | | 18 | Fluid outlet opening |
| 12 | Fluid-filled cavity | 19 | Fluid flow out of 12 into 15 |
| | | 20 | Exterior of 12 |
| 13 | Absolute pressure sensor | | |
| 130 | Communication link | *F* | External force |
| 131 | Sensing opening | *f* | Force signal |
| | | *p* | In-cavity pressure |
| 14 | Evaluation unit | *S* | Sensor signal |
| 140 | Communication link | *τ*ₑᵥₐₗ | typical evaluation time for 14 |
| | | *τ*ₑₓ | response time of the fluid exchange during said pressure change between 12 and 15 |
| 15 | Integrated circuitry of 10 | | |
| 151 | non-volatile memory | | |
| 153 | volatile memory | *τ*ₚ | Pressure signal rise time |
| 154 | processor | *τ*ₛₑₙ | typical response time of the pressure sensor 13 |
| 155 | data interface | | |
| 156 | user interface | | |

## Claims

1. Electronic device (10) comprising:
a housing (11);
at least one fluid-filled cavity (12) that is coupled to the housing (11) such that a pressure (*p*) in said cavity (12) changes upon application of an external force (F) onto the housing (12);
at least one pressure sensor (13) associated with said cavity (12) configured and arranged for sensing inside said cavity (12) said change in pressure (*p*) due to said external force (F), wherein the pressure sensor (13) is further configured to generate a pressure signal (*S*) indicative of said change in pressure (*p*); and
an evaluation unit (14) configured and arranged to receive said pressure signal (*S*), wherein the evaluation unit (14) is configured:
to derive from said pressure signal (*S*) at least one component of said external force (*F*) or an equivalent thereof, and to generate a force signal (*f*) that is indicative of said at least one component of said external force (*F*) or the equivalent thereof; and/or
to derive from said pressure signal (*S*) a deformation of the housing (11) in at least one direction or an equivalent thereof, and to generate a force signal (*f*) that is indicative of said deformation of the housing (11) in at least one direction or the equivalent thereof.

2. Electronic device (10) according to claim 1, wherein the pressure sensor (13) is an absolute pressure sensor.

3. Electronic device (10) according to claim 1 or 2, wherein the electronic device (10) is configured to generate from said force signal (*f*) a control signal (*C*) for controlling at least one function of the electronic device (10).

4. Electronic device (10) according to claim 1 or 3, wherein the pressure sensor (13) is arranged within said cavity (12).

5. Electronic device (10) according to any one of the claims 1 to 4, wherein said cavity (12) is at least part of an interior space of said housing (11).

6. Electronic device (10) according to any one of the claims 1 to 5, wherein said cavity (12) or said housing (11) is air fluid-exchange controlled or substantially fluid-proof, wherein the fluid preferably is air and/or water.

7. Electronic device (10) according to claim 6, wherein the housing (11) is fluid-exchange controlled such that a response time (*τ*ₑₓ) of the fluid that is exchanged during said pressure change between the cavity (12) and the exterior (15) of the cavity (12) is longer, preferably at least 3 to 10 times longer, than a typical rise time (*τ*_{P}) of the pressure signal (*S*) inside the cavity (12).

8. Electronic device (10) according to any one of the claims 3 to 7, wherein the evaluation unit (14) is configured to derive an absolute value (|*F*|) and/or a time dependence (*F*(t)) and/or the derivatives of the time dependence *F*(t) of said at least one component of said external force (*F*) or the equivalent thereof, wherein the electronic device (10) is configured to use said absolute value (|*F*|) or said time dependence (*F*(t)) or said derivatives of the time dependence *F*(t), respectively, as the control signal (*C*) for controlling said at least one function of the electronic device (10).

9. Electronic device (10) according to any one of the claims 1 to 8, wherein the electronic device (10) is configured to use as said external force (*F*) a force applied onto a part or parts of the housing (11), in particular onto any part or parts of the housing (11) or onto a touch screen panel (16,17) of the electronic device (10), if any, or onto any part or parts of the housing (11) except for a touch screen panel (16,17), if any, during an input gesture of a user of the electronic device (10).

10. Electronic device (10) according to any one of the claims 1 to 9, wherein a response time (*τ*ₛₑₙ) of the pressure sensor (13) and a response time (*τ*ₑᵥₐₗ) of the evaluation unit (14) are chosen such that the electronic device (10) is configured to use repeated tapping motions by the user for controlling said at least one function of the electronic device (10).

11. Electronic device (10) according to any one of the claims 1 to 10, wherein the electronic device (10) is a mobile device, in particular a wrist watch, a mobile phone, a tablet, wearables, a game controller or a laptop.

12. Electronic device (10) according to any one of the claims 1 to 10, wherein the device (10) comprises multiple cavities (12) with at least one associated pressure sensor (13) each.

13. Method for controlling at least one function of an electronic device (10), the electronic device (10) comprising a housing (11) and being preferably a mobile device, the method comprising the steps of:
sensing an external force (F) onto said housing (11) with at least one pressure sensor (13), preferably at least one absolute pressure sensor, the external force (F) being preferably applied to a touch screen panel (16,17) of the electronic device (10),
wherein the electronic device (10) comprises at least one fluid-filled cavity (12) that is coupled to said housing (11) such that a pressure (*p*) in said cavity (12) changes upon application of said external force (*F*) onto the housing (12);
wherein the electronic device (10) comprises the pressure sensor (13) that is used for measuring said change of said pressure (*p*) in said cavity (12) in response to said external force (*F*) acting onto the housing (11), wherein a pressure signal (*S*) indicative of said change of said pressure (*p*) is generated with said pressure sensor (13);
wherein the electronic device comprises an evaluation unit (14),
wherein said pressure signal (*S*) is received by the evaluation unit (14) for
- deriving at least one component of said external force (*F*) or a deformation of the housing (11) in at least one direction or equivalents thereof, and
- generating a force signal (*f*) that is indicative of said at least one component of said external force (*F*) or said deformation of the housing (11);
wherein said force signal (*f*) is used for generating a control signal (*C*) for controlling at least one function of the electronic device (10).

14. Method according to claim 13, wherein an absolute value (|*F*|) and/or a time dependence (*F*(t)) of said at least one component of said external force (*F*) is sensed an used for controlling said at least one function of the electronic device (10).

15. Use of at least one pressure sensor (13), preferably an absolute pressure sensor, to determine at least one component of an external force acting onto a housing (11) of an electronic device, in particular of a touch screen panel (16; 17) of a mobile device, wherein a force signal (*f*) is generated, in particular for controlling functionalities of said electronic device (10), based on a pressure signal (*S*) generated by said pressure sensor (13).
